Europäisches Patentamt

European Patent Office

Office européen des brevets

(19)

(11) Numéro de publication: **0 036 105**
**B1**

(12) **FASCICULE DE BREVET EUROPEEN**

(45) Date de publication du fascicule du brevet: **21.12.83**

(21) Numéro de dépôt: **81101278.0**

(22) Date de dépôt: **23.02.81**

(51) Int. Cl.³: **H 01 M 6/18, C 03 C 3/30, C 03 C 3/12**

(54) Composition vitreuse conductrice de cations alcalins, procédé de préparation d'une telle composition et générateur électrochimique en faisant application.

(30) Priorité: **29.02.80 FR 8004547**

(43) Date de publication de la demande:
**23.09.81 Bulletin 81/38**

(45) Mention de la délivrance du brevet:
**21.12.83 Bulletin 83/51**

(84) Etats contractants désignés:
**AT BE CH DE FR GB IT LI LU NL SE**

(56) Documents cités:
**FR - A - 2 341 953**
**FR - A - 2 387 192**

**C.R. ACAD. SOC. PARIS t. 290 (14 avril 1980) Série C-pages 251-253 JEAN-PIERRE MALUGANI et al.: "Nouveau verre au lithium à haute conductivité ionique"**

**ELECTROCHIMICA ACTA, vol. 22, Pergamon Press, GB R.A. HUGGINS: "Recent results on lithium ion conductors", pages 773-781**

(73) Titulaire: **GIPELEC Société Anonyme dite :**
**125, rue du Président Wilson**
**F-92302 Levallois-Perret (FR)**

(72) Inventeur: **Malugani, Jean-Pierre, Prof.**
**21, rue du Périgord**
**F-25000 Besançon (FR)**
Inventeur: **Robert, Guy, Prof.**
**Chemin du Pommeret**
**Morre F-25660 Saone (FR)**

(74) Mandataire: **Weinmiller, Jürgen et al,**
**Zeppelinstrasse 63**
**D-8000 München 80 (DE)**

(56) Documents cités .
**PHYSICS AND CHEMISTRY OF GLASSES, vol. 18, no. 1, février 1977 Y. KAWAMOTO et al.: "Silver diffusion in As2S3-Ag2S, GeS2-Ag2S and P2S5-Ag2S glasses", pages 19-23**

Composition vitreuse conductrice de cations alcalins, procédé de préparation d'une telle composition et générateur électrochimique en faisant application

L'invention concerne une composition vitreuse conductrice de cations alcalins utilisée comme électrolyte solide cationique et un procédé de préparation d'une telle composition.

Les électrolytes solides sont utilisés dans différents dispositifs électrochimiques, tels que générateurs électrochimiques et dispositifs d'affichage. Ils présentent l'avantage, par rapport aux électrolytes liquides, de simplifier les problèmes technologiques liés à leur mise en oeuvre, et en particulier les problèmes d'étanchéité des dispositifs, Malheuresement les électrolytes solides connus conducteurs de cations alcalins possèdent des conductivités relativement faibles aux températures inférieures à 100°C de sorte que les générateurs électrochimiques comportant de tels électrolytes présentent des performances très inférieures à celles des générateurs à électrolytes liquides.

On a déjà proposé différentes compositions vitreuses conductrices de cations couvertes par la formule générale aA$_m$Y$_n$, bM$_2$Y, cMX, dans laquelle:
— A représente le bore, le silicium, le germanium ou le phosphore,
— Y représente l'oxygène ou le soufre
— M représente le lithium ou le sodium
— X représente le chlore, le brome ou l'iode, c pouvant être égal ou supérieure à zéro.

Toutes les compositions de ce genre connues jusqu'à maintenant présentent à 25°C des conductivités inférieures à $10^{-5}$ $\Omega^{-1}$cm$^{-1}$.

La présente invention a pour but de fournir une composition vitreuse conductrice de cations possédant une meilleure conductivité à température ordinaire.

L'invention a pour objet une composition vitreuse conductrice de cations alcalins, répondant à la formule aP$_2$S$_5$, bLi$_2$S, cLiX, dans laquelle X représente le chlore, le brome ou l'iode, c'est supérieur ou égal à zéro et a, b et c représentent des nombres choisis de telle sorte que le rapport

$$\frac{b}{a+b}$$

soit compris entre 0,61 et 0,70 et le rapport

$$\frac{c}{a+b+c}$$

soit inférieur ou égal à une limite correspondant à la solubilité en phase vitreuse de LiX dans le composé aP$_2$S$_5$, bLi$_2$S.

La composition selon l'invention se distingue donc des précédentes notamment par les points suivants:
— on a à la fois Y = S et M = Li

— le rapport b/a est voisin de 2 avec A = P.

De façon inattendue, on obtient ainsi une conductivité à 25°C de $10^{-4}\Omega^{-1}$cm$^{-1}$ environ pour c = 0, et plus élevée encore pour c > 0. Lorsque X est le brome, ladite valeur limite du rapport

$$\frac{c}{a+b+c}$$

est 0,20 environ. Pour l'iode, elle atteint 0,50 environ.

L'invention a également pour objet un procédé de fabrication de la composition ci-dessus, consistant à fondre ensemble les composants P$_2$S$_5$, Li$_2$S et le cas échéant LiX à une température comprise entre 700 et 950°C, à effectuer une trempe et un recuit à une température de l'ordre de 100°C.

Lors de cette préparation on peut introduire une quantité de LiX excédant sa solubilité dans le verre. On obtient alors un mélange intime de verre saturé en LiX et de LiX cristallisé.

L'invention a également pour objet un générateur électrochimique utilisant la composition ci-dessus comme électrolyte et défini dans la revendication 6.

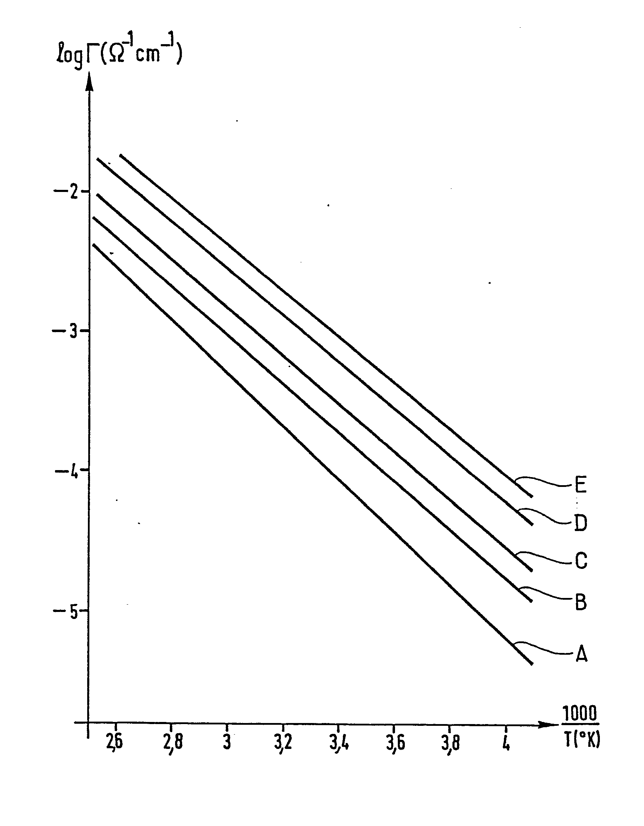

L'invention sera mieux comprise grâce aux exemples de réalisation décrits ci-après à titre illustratif et non limitatif, en regard du dessin annexé dans lequel la figure unique représente des courbes de conductivités de compositions selon l'invention en fonction de la température.

### Exemple 1
On mélange dans une ampoule de silice sous atmosphère d'argon déshydraté 1 partie en moles de P$_2$S$_5$ et 2 parties en moles de Li$_2$S sous forme de poudres, L'ampoule est scellée sous un vide de $1,33.10^{-5}$ bar et portée à 900°C environ pendant 10 minutes. Le mélange fondu est refroidi lentement à 700°C puis trempé à température ambiante, et un recuit est effectué à 100°C. On obtient un verre de formule P$_2$S$_5$, $_2$Li$_2$S, soit un rapport

$$\frac{b}{a+b} = \frac{2}{3}.$$

La variation de la conductivité de ce verre en fonction de la température est donnée par la courbe A de la figure qui représente le logarithme décimal de la conductivité $\Gamma$ en $\Omega^{-1}$cm$^{-1}$ en fonction de 1000/T, T étant la température en degrés Kelvin. La conductivité à 25°C est de $10^{-4}\Omega^{-1}$cm$^{-1}$.

Une pile électrique a été préparée en disposant un disque de 1 mm d'épaisseur de ce verre entre une électrode négative de lithium et une électrode positive comprenant 50% de $PbI_2$ et 50% de plomb en poids. Cette pile présente une tension de 2,1 volts.

### Exemples 2 à 5

Le mode opératoire de l'exemple 1 est répété avec des mélanges de poudres présentant toujours un rapport molaire $Li_2S/P_2S_5$ égal à

$$2 \left( \frac{b}{a+b} = \frac{2}{3} \right),$$

mais contenant en outre LiI à des fractions molaires

$$\left( \frac{c}{a+b+c} \right)$$

de 0,15, 0,25, 0,40 et 0,45 respectivement pour les exemples 2 à 5. Les conductivités des verres obtenus sont données par les courbes B, C, D et E de la figure. En particulier la conductivité à 25°C du verre à 45% de LiI est de $10^{-3}\Omega^{-1}cm^{-1}$, soit plus de 100 fois plus élevée que celle des verres connus conducteurs de cations.

### Exemple 6

Le même mode opératoire est appliqué en utilisant, pour 1 mole de $P_2S_5$, 2 moles de $Li_2S$ et 0,75 mole de LiBr, soit un rapport molaire de 0,2 pour LiBr. On obtient un verre dont la conductivité à 25°C est $1,4.10^{-4}\Omega^{-1}cm^{-1}$.

La fraction molaire 0,2 correspond à la solubilité de LiBr dans la phase vitreuse, alors que ce rapport limite est sensiblement égal à 0,5 pour LiI. Si ces taux sont dépassés on obtient un mélange de verre saturé en LiX et de LiX cristallisé, dans lequel ce dernier joue le rôle de liant et facilite la mise en oeuvre de l'électrolyte solide. De plus le verre contenu dans le mélange présente une conductivité optimale puisque, comme l'indiquent les courbes de la figure, la conductivité est fonction croissante du taux de LiX.

Le rapport molaire $Li_2S/P_2S_5$ peut quant à lui s'écarter de la valeur 2 sans perte d'homogénéité, et varier entre 1,56 et 2,33, correspondant respectivement à 0,61 et 0,70 pour

$$\frac{b}{a+b}$$

dans la formule $aP_2S_5$, $bLi_2S$, $cLiX$.

La fusion des composants peut s'effectuer à toute température de l'intervalle 700°C—950°C. Toutefois une température relativement élevée, 900°C par exemple, permet d'obtenir un verre plus limpide qu'une température plus basse. Un refroidissement lent jusqu'a 700°C permet de combiner la totalité de $P_2S_5$, dont la tension de vapeur est relativement élevée à 900°C.

Les verres selon l'invention peuvent être utilisés comme électrolytes solides dans des piles au lithium dont la matière active est par exemple $MoO_3$, $WO_3$, $TiS_2$, $NiPS_3$ ou un bismuthate de cuivre ou de plomb.

En raison de leur fragilité, les verres seront de préférence mis en oeuvre sous forme de plaques frittées à partir d'une poudre comprimée obtenue par broyage du verre. Toutefois la température de ramollissement relativement basse des verres selon l'invention (140°C environ pour les verres riches en LiI) permet également d'envisager la mise en oeuvre par compression à chaud d'un film continu de verre ramolli. Un autre mode de mise en oeuvre consiste à associer le verre pulvérisé à un liant favorisant le compactage et la cohésion du mélange. Comme liants on peut utiliser par exemple les halogénures de lithium qui présentent l'avantage d'être eux-mêmes conducteurs d'ions lithium, quoiqu'à un moindre degré que les verres selon l'invention. Le mélange verre-halogénure de lithium cristallisé peut être avantageusement obtenu, comme on l'a vu précédemment, en introduisant un excès d'halogénure lors de la préparation du verre.

### Revendications

1. Composition vitreuse conductrice de cations alcalins, répondant à la formule $aP_2S_5$, $bLi_2S$, $cLiX$, dans laquelle X représente le chlore, le brome, ou l'iode, c est supérieur ou égal à zéro et a, b et c représentent des nombres choisis de telle sorte que le rapport

$$\frac{b}{a+b}$$

soit compris entre 0,61 et 0,70 et le rapport

$$\frac{c}{a+b+c}$$

soit inférieur ou égal à une limite correspondant à la solubilité en phase vitreuse de LiX dans le composé $aP_2S_5$, $bLi_2S$.

2. Composition selon la revendication 1, caractérisée par le fait que X est le brome et que ladite limite est 0,20.

3. Composition selon la revendication 1, caractérisée par le fait que X est l'iode et que ladite limite de 0,50.

4. Procédé de préparation d'une composition selon l'une des revendications 1 à 3, caractérisé par le fait qu'il consiste à fondre ensemble les composants $P_2S_5$, $Li_2S$ et le cas échéant LiX à une température comprise entre 700 et 950°C, à effectuer une trempe et un recuit à une température de l'ordre de 100°C.

5. Procédé selon la revendication 4, caractérisé par le fait qu'on introduit une quantité de LiX excédant sa solubilité dans le verre de façon à obtenir un mélange intime de verre saturé en LiX et de LiX cristallisé.

6. Générateur électrochimique faisant application de la composition vitreuse conductrice de cations alcalins selon la revendication 1, caractérisé par le fait que l'électrode négative est à base de lithium, l'électrolyte est formé par ladite composition vitreuse la matière active de l'électrode positive comprenant au moins un composé choisi dans le groupe formé par $MoO_3$, $WO_3$, $TiS_2$, $NiPS_3$, un bismuthate de cuivre ou de plomb.

## Patentansprüche

1. Glasartiger alkalikationleitender Stoff, der der Formel $aP_2S_5$, $bLi_2S$, cLiX entspricht, in der X Chlor, Brom oder Jod darstellt, c größer oder gleich Null ist, und a, b und c derart ausgewählte Zahlen darstellen, daß das Verhältnis

$$\frac{b}{a + b}$$

zwischen 0,61 und 0.70 liegt und das Verhältnis

$$\frac{c}{a + b + c}$$

unter oder bei einem Grenzwert liegt, der der Lösbarkeit von LiX in der Glasphase in der Mischung $aP_2S_5$, $bLi_2S$ entspricht.

2. Stoff nach Anspruch 1, dadurch gekennzeichnet, daß X Brom ist und der Grenzwert 0,20.

3. Stoff nach Anspruch 1, dadurch gekennzeichnet, daß X Jod ist und der Grenzwert 0,50.

4. Verfahren zur Herstellung eines Stoffes nach einem der Ansprüche 1 bis 3, dadurch gekennzeichnet, daß es darin besteht, die Bestandteile $P_2S_5$, $Li_2S$ und eventuell LiX zusammen bei einer Temperatur zwischen 700 und 950°C zu schmelzen, dann abzuschrecken und dann eine Wärmebehandlung bei einer Temperatur von etwa 100°C durchzuführen.

5. Verfahren nach Anspruch 4, dadurch gekennzeichnet, daß man eine Menge LiX hinzufügt, die seine Lösbarkeit im Glas übersteigt, so daß man eine gute Mischung aus mit LiX gesättigtem Glas und kristallisiertem LiX erhält.

6. Elektrochemischer Generator, der den glasartigen alkalikationleitenden Stoff gemäß Anspruch 1 verwendet, dadurch gekennzeichnet, daß die negative Elektrode auf der Basis von Lithium hergestellt ist, daß der Elektrolyt aus dem glasartigen Stoff besteht, wobei das aktive Material der positiven Elektrode mindestens einen Stoff enthält, der aus der Gruppe bestehend aus $MoO_3$, $WO_3$, $TiS_2$, $NiPS_3$, einem Kupferwismutat oder Bleiwismutat ausgewählt ist.

## Claims

1. A vitreous alcalication conducting composition, responding to the formula $aP_2S_5$, $bLi_2S$, cLiX, in which X represents chlorine, bromine or iodine, c is greater than or equal to zero and a, b and c represent numbers chosen in such a way that the ratio

$$\frac{b}{a + b}$$

lies between 0,61 and 0,70 and the ratio

$$\frac{c}{a + b + c}$$

is less than or equal to a limit which corresponds to solubility in the vitreous phase of LiX in the component $aP_2S_5$, $bLi_2S$.

2. A composition according to claim 1, characterized in that X is bromine and that said limit is situated at 0,20.

3. A composition according to claim 1, characterized in that X is iodine and that said limit is situated at 0,50.

4. A method of preparing a composition according to one of the claims 1 to 3, characterized in that it consists in melting together the components $P_2S_5$, $Li_2S$ and possibly LiX at a temperature comprised between 700 and 950°C, in effecting a tempering and an annealing at a temperature of about 100°C.

5. A method according to claim 4, characterized in that a quantity of LiX is introduced which exceeds its solubility in the glass, so as to obtain an intimate mixture of glass saturated with LiX and of crystallized LiX.

6. An electrochemical generator using the vitreous alcalication conducting composition according to claim 1, characterized in that the negative electrode is made on the basis of lithium, the electrolyte is formed by said vitreous composition, the active material of the postive electrode comprising at least a compound chosen from the group formed by $MoO_3$, $WO_3$, $TiS_2$, $NiPS_3$, a bismuthate of copper or lead.